# EUROPEAN PATENT SPECIFICATION

(11) **EP 3 434 123 B1**
(45) Date of publication and mention of the grant of the patent: **22.04.2020**
(21) Application number: 18185551.1
(22) Date of filing: 25.07.2018
(51) Int. Cl.: A41D 13/018, A41D 13/05, B32B 5/26, B60R 21/2338, B62J 27/00, B60R 21/233, B60R 21/235, A41D 31/00, A63B 71/08, D04B 1/22

(54) **PROTECTIVE DEVICE**
SCHUTZVORRICHTUNG
DISPOSITIF DE PROTECTION

(30) Priority: 25.07.2017 IT 201700084843
(43) Date of publication of application: 30.01.2019
(73) Proprietor: Dainese S.p.A., 36064 Colceresa (Vicenza) (IT)
(72) Inventor: AZZOLIN, Mr. Andrea, 36060 Molvena (Vicenza) (IT)
(74) Representative: Manfrin, Marta

(56) References cited:
- EP-A1- 3 167 730
- WO-A1-2006/089144
- WO-A1-2010/067288
- WO-A1-2014/199309
- WO-A1-2016/178143
- WO-A2-2010/067289

## Description

The present disclosure refers to a protection device for the personal protection of a user, preferably of wearable type. The protective device includes an inflatable element suitable to protect against impacts and/or falls, or to prevent the consequences of an impact or a fall, the body of a user, such as a passenger, a motor vehicle driver, a skier, a rider, or a similar user, during a sporting and/or work activity.

A protective device is, for example, described in the international patent application WO2010/067288. This patent application describes a device including an inflatable bag provided with gas generators. The inflatable bag is a bag formed by opposed portions joined together or connected along the perimeter to form a case. More particularly, the case is formed by two opposite walls or sheets, a textile structure including a first mesh and a second mesh and tie elements attached to the meshes. The tie elements preferably connect opposite portions of the inflatable element. Each mesh is tightly associated with the respective wall.

The tie elements are threads and have opposite ends permanently fixed with the mesh of the respective wall. The fastening at the opposite ends of the tie elements is, for example, obtained by interweaving tie elements between the threads of the mesh. The length of the tie elements is adjusted in such a way that the tie elements have a condition of maximum tension and/or maximum extension when the inflatable element is inflated. In practice, the thickness or height of the inflatable element can be controlled and established a priori, since the maximum expansion of the inflatable element in a thickness or height direction can be controlled by checking the length and the maximum tension of the tie elements.

The authors of the present disclosure have observed that the bag described in said international patent application, although advantageous from many points of view, has a structure which may not be optimal for certain applications.

In order to make bags of different heights, for example to make a bag having a step profile, in the aforementioned application, the use of a plurality of textile structures is proposed, wherein the threads or tie elements have different lengths. The longer the length of the thread, the greater the height of the bag. The textile structures are joined along the perimeter, and covered with two sheets or walls having a surface extension such that they can cover the meshes of both structures. Each textile structure therefore represents a portion of a single bag. Two opposite walls or sheets enclose all the textile structures within them. It is therefore a single bag with different textile structures located side by side and joined together.

At the basis of the present disclosure, there is an acknowledgment that the use of a single bag with textile structures having thread of different length, while allowing to control the shape of the bag a priori, does not allow to control a sequence of expansion in time or time trend of inflation, especially in a direction of thickness or height. In fact, inside the bag, the room where the textile structures are housed is completely open. Therefore, an inflation fluid can expand in an undifferentiated and uncontrolled manner within the chamber. A protective device according to the preamble of claim 1 is known from WO2014/199309.

A technical problem underlying the present disclosure is that of providing a protective device whose overall height and shape or profile can be controlled a *priori,* and wherein, at the same time, an inflation sequence can also be controlled.

To overcome said technical problem, a protection device and a protection method according to the respective independent claims are provided. Secondary features of the object of the present disclosure are defined in the corresponding dependent claims.

In particular, the device comprises at least two inflatable elements, at least partially overlapping and two respective inflation chambers. The two inflation chambers are in fact, at least partially, in an overlapping position. In other words, the at least two inflatable elements are preferably joined together and define a multilayer structure. For example, the two inflatable elements are partially overlapped to form a structure whose profile defines a step or a substantially "L" shape profile.

The reciprocal and superimposed arrangement of the two inflatable elements makes it possible to obtain on one side a desired bag-airbag profile and, on the other hand, to control an inflation sequence. In fact, the two inflatable elements can be inflated together or in time sequence.

The personal protection device is configured so that in an inflated condition the first inflation chamber and the second inflation chamber define an overall thickness to be reached, which corresponds, at least in the overlap area, to a sum of the thickness of the individual inflatable elements.

The personal protection device according to the present disclosure may be of wearable type, that is to say having a configuration, structure and shape suitable for a user to wear. In addition, possibly, the protective device may be included or be an integral part of a garment, for example to be accommodated in a suitable pocket or housing of the garment.

It is to be understood that the protection device may be provided with any of the following inflatable element options:
two or more inflatable elements conveniently overlapped and placed in fluid communication; or
two or more inflatable elements not in fluid communication or fluidically independent, and then independently inflated.

It is also possible to provide a plurality of protection devices each provided with two or more overlapping inflatable elements (fluidly connected or fluidically independent) wherein each protection device is disposed in correspondence with an area of the body of a user to be protected.

It follows that the two inflatable elements can be inflated sequentially or simultaneously but making sure that the inflation times are precisely controlled.

The advantages deriving from such a technical solution consists in having a single protection device with a multiple advantage:
- a precise control of the overall height of the inflatable element, by adjusting the thickness of the individual inflatable elements, and at the same time
- an accurate control of the inflation timing;
- a control of the shape obtainable through the overlapping of the two inflatable elements.

The control of inflation times is possible due to the fact that two inflatable elements of smaller size can be inflated compared to an inflatable element of the same height.

A control of the dimensions of the two single chambers can be obtained by using inflatable elements made according to the technology already known in the field, for example in the international patent application WO2010/067288, in the European patent application EP3167730A1 and in the international patent application WO2016/178143.

In particular, according to the technology described in said patent applications, the inflatable element is made of a textile structure formed by a first mesh, or first mesh portion, and a second mesh or second mesh portion. The meshes are connected to each other by means of tie elements, preferably threadlike elements. The textile structure is included between two sheets or walls. The first mesh lines at least partially the first wall and the second mesh or second portion of the mesh lines at least partially the second wall.

According to an embodiment and according to the teaching of the international application WO2016/178143, a textile structure with threads includes, instead of a prefabricated structure including two precut meshes, a knitted body having a shape corresponding to the inflatable element to be obtained.

The walls or sheets are joined together, even indirectly, along the respective perimeter or edge. The wall has a "waterproofing" function. The term "waterproofing" should be understood, in the context of the present disclosure, in relation to a sheet capacity to retain the inflation gas of the bag for most of the time necessary for the inflatable element to perform its protective function. In particular, in the field of protective clothing, the time in which an inflatable element must remain in an inflated condition is 50 milliseconds. The term waterproofing does not necessarily have to be understood as an absolute sealing capacity of the gas, or even less so that the bag is completely gas-tight.

As said, the two inflatable elements are joined together. For example, the two inflatable elements are joined together through one of the respective walls. In other words, a wall of the two walls of an inflatable element is superposed and joined to a wall of the two walls of the second inflatable element. The union can be obtained through gluing.

In practice, preferably, the two inflatable elements which identify two inflation chambers, i.e. a first inflatable element provided with a respective first inflation chamber and a second inflatable element provided with a respective second inflation chamber, are arranged overlapped, and are joined together at the respective wall or sheet. The union then occurs after the autonomous manufacturing of the two inflatable elements. The inflatable structure obtained is therefore obtained by joining at least two inflatable elements, wherein each inflatable element is intended as a finished product, which could be autonomously inflatable.

The sheets, or walls, and preferably also the meshes or mesh portions of each inflatable element which are placed adjacent and in contact in the overlap are preferably provided with one or more communication holes. The fluid communication holes of both the inflatable elements are communicating with each other, preferably perfectly coincident. The communication hole may have a calibrated size for a respective control of the proper inflation gas flow. As an alternative, it is possible to provide each hole with an overpressure valve. The valve can be configured to pass all excess fluid away from that needed to maintain pressure in the first inflation chamber.

Alternatively, it is also possible to place a Y joint having an output branch each connected to a respective inflation chamber to an output of the gas generator.

Other advantages, features and methods of use of the object of the present disclosure will be apparent from the following detailed description of some of its preferred embodiments, given by way of a non-limiting example. It is however evident how each embodiment can have one or more of the advantages listed above; in any case it is not however required that each embodiment simultaneously present all the advantages listed.

Reference will be made to the figures of the attached drawings, in which:

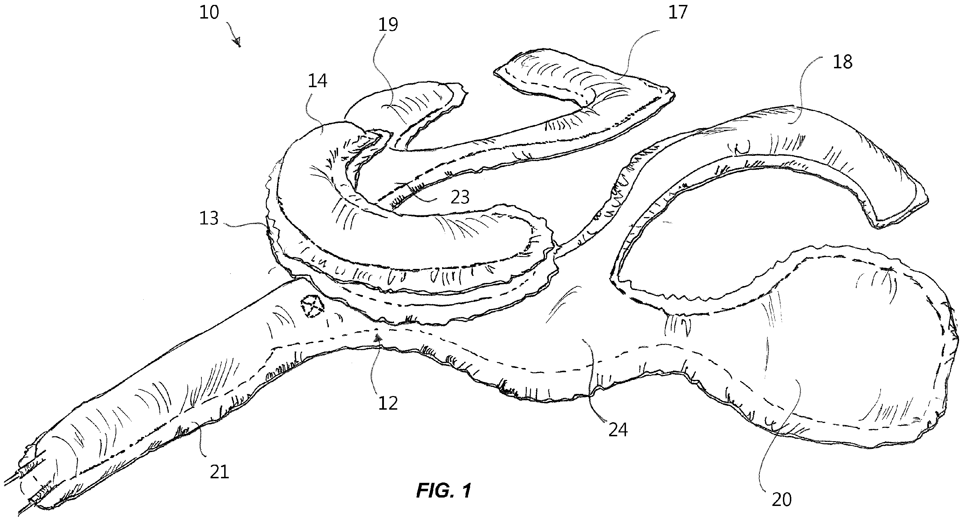

- Figure 1 shows a top view of a protection device according to an embodiment of the present disclosure;

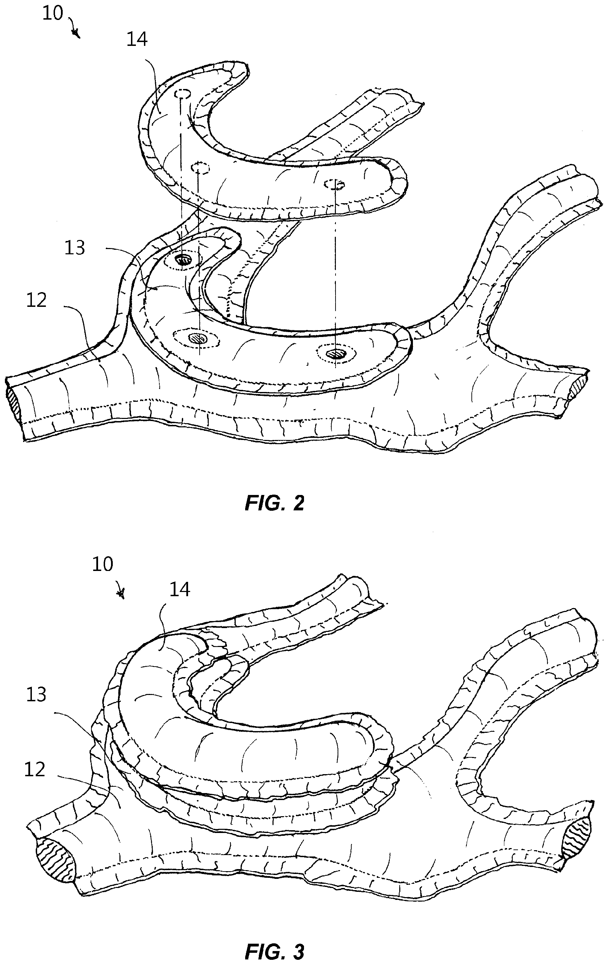

- Figure 2 shows an enlarged scale portion of the device of Figure 1 in a manufacturing phase;
- Figure 3 shows an enlarged scale portion of the device of Figure 1 at the end of a manufacturing phase;
- Figure 4 shows a partially sectional view of a protection device according to an embodiment of the present disclosure;
- Figure 5 schematically shows a particular V of Figure 4;
- Figure 6 schematically shows a particular VI of Figure 6;
- Figure 7 schematically shows an application of a protection device according to the present disclosure;
- Figure 8 shows a protective device according to another embodiment of the present disclosure.

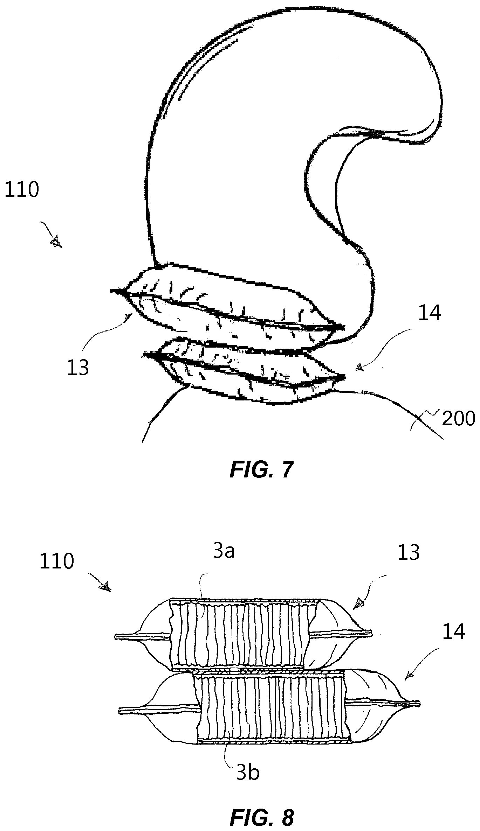

With reference to the attached figures, with the reference number 10, 110 a personal protection device according to the present disclosure is indicated according to respective embodiments. The protective device may be associated with, or included in, a garment, in a manner known to a person skilled in the art. The garment, indicated schematically in figure 7 with the reference number 200 can be, for example, a motorcycle suit, or a jacket for motorcycle use. The garment can house the protective device in a respective pocket. For example, the garment may house the protective device in an upper area of the torso, and/or in the collar.

In particular, the protection device comprises a plurality of inflatable elements 12, 13, 14, mutually superposed to form a multilayer structure. Each inflatable element 12, 13, 14 is shaped like a case and includes an inner chamber 3a, 3b. Each inflatable element 12, 13, 14 is adapted to assume substantially a first rest condition or deflated condition, and a second active condition or inflated condition. The inflating modalities of the inflatable element 12, 13, 14 will be described in the following description.

In inflated condition, the inflatable elements can leak out of the garment or remain protected inside a pocket.

In the illustrated embodiment, each inflatable element 12, 13, 14 is suitably cut into shape or generally shaped to protect, when in use, the torso of a user and the upper area under the helmet. To this end, a first inflatable element 12 has a shape with two front portions 17, 18 for the chest, two side wings 19, 20 for covering the shoulders of a user, and a spinal portion 21, designed to protect the user's backbone. A gas generator, not visible in the drawings, in the example a gas cylinder under pressure, is included in the spinal portion 21 of the inflatable element, more preferably in an end region of the spinal portion 11. Portions 23, 24 connect the spinal portion 21 with the front portions 17, 18. The other two inflatable elements 13, 14 are smaller in size, shaped as "C" and occupy a neck area of a user, such as to position themselves under the helmet of a user, at least in inflated condition.

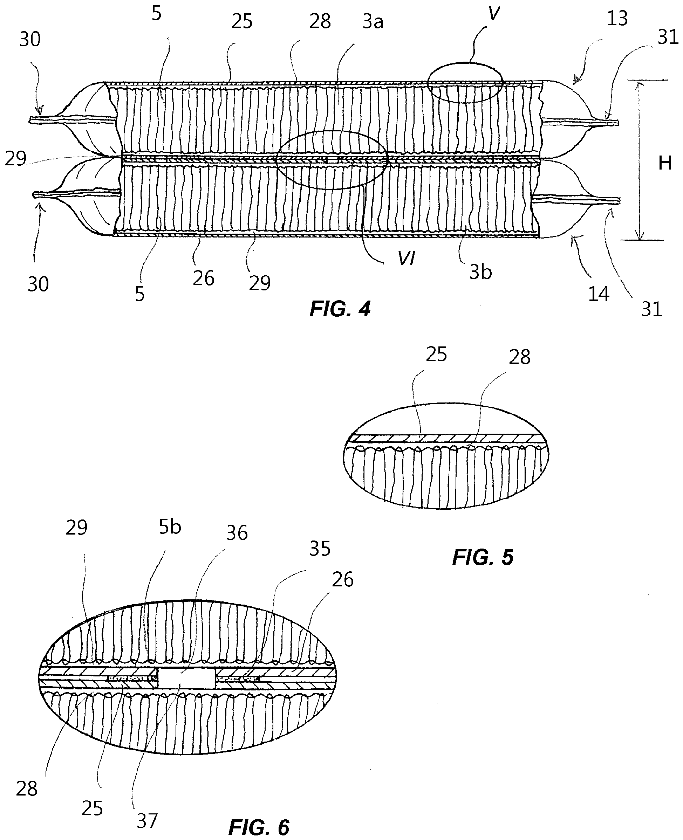

According to one aspect of the present disclosure, the protection is offered by two or more of the inflatable elements 12, 13, 14, in the example all three, in an at least partially overlapped condition, so as to form a maximum thickness in the inflated condition of the protection device defined by the sum of the thickness of each inflatable element 12, 13, 14 in an inflated condition. In other words, the inflatable elements form a multilayer inflatable structure whose overall thickness or height H in inflated condition is the sum of the thicknesses of the three inflatable elements 12, 13, 14. This condition is visible in figures 4 and 6. In figure 4 is identified, by way of example, only the height corresponding to the sum of the height of the inflatable element 13 and of the height of the inflatable element 14. The protection device of figure 7 and figure 8 has the same characteristics and can be obtained by overlapping the two inflatable elements 13, 14.

Each inflatable element 12, 13, 14 comprises a plurality of tie elements 5 distributed in the inner chamber 3a, 3b and permanently connected to respective portions of each inflatable element 12, 13, 14. The term tie element 5 means an element or entity having the function of holding together or constrained or stationary, being tensioned in tension, two or more parts of the inflatable element 12, 13, 14, at least when the latter is in an inflated condition. Figures 4 to 6 refer to the two inflatable elements 13 and 14 of smaller size, it being understood that the description applies to any combination of inflatable elements in an overlapped condition.

In the example, the tie elements 5 are thread-like, and are flexible and inextensible elements. Therefore, they are appropriately sized so that, when the inflatable element 12, 13, 14 is in the rest condition, they are preferably not subjected to tensioning and are collapsed in the inner chamber 3, whereas when the inflatable element 12, 13, 14 is in inflated condition they are subjected to tension.

The inflatable element comprises opposite walls 25, 26 perimetrically joined along the edges 30, 31. More in particular, each inflatable element 12, 13, 14 comprises a textile structure comprising the aforesaid tie elements 5 and two opposing meshes 28, 29, each of which internally lines, that is to say, on the inner chamber side 3a, 3b, a respective wall 25, 26. In practice, a textile structure formed by two meshes 28, 29 is arranged inside the area between the two walls 25, 26 and each mesh 28, 29 is preferably fixed to the respective wall 25, 26.

Even more particularly, to give structural stability to the inflatable element, each mesh 28, 29 is firmly fixed to the surface of the respective wall 15, 16, preferably by means of a glue film or glue layer. Each inflatable element can be made according to the technology described in WO2010/067288 A1 or WO2016/178143 or as described in the European application EP3167730A1.

According to one aspect of the present disclosure, as stated above, the protection device is configured for inflating the two or more inflatable elements 12, 13 and 14 at least partly in an overlapped condition.

In order to obtain a stable overlap, a reciprocal bonding of the two walls 25, 26 is preferably provided, that is to say a zone of direct stable connection between two portions of walls 25 and 26, or between both walls in their entirety. In practice, the inflatable elements are prepared autonomously, and then joined once made, by connecting the walls.

The gluing can be obtained by means of a layer acting as glue or adhesive, in the example a layer 35 of polyurethane glue (not thermoplastic), distributed on the outer side of a wall 25, 26 of an inflatable element 13 and on the opposite outer or facing layer of the wall of the other inflatable element 14. The surface extension of the layer 35 may be limited or limited to the surface extension of the walls 25, 26.

In order to inflate each inflatable element 12, 13 and 14 in the event of a fall and/or slippage and/or an unexpected impact on the part of a user or a vehicle on which it proceeds, the protection device 10, 110 according to this invention is able to cooperate with suitable activation means operatively connected to a gas generator illustrated in the figures just as an illustration of a compressed cold gas cylinder. The cylinder can be included in the garment. Alternatively, such inflation means may comprise pyrotechnic or hybrid type gas generators or other types known to the state of the art.

To obtain a differentiated inflation between the two or more inflatable elements 12, 13 and 14 various alternative solutions can be provided.

For example, the protective device 10 provides that the gas cylinder is connected to the inflatable element 12 so as to send high pressure gases into this inflatable element. The gas then flows into the remaining inflatable elements 13, and 14. Holes 36, 37 for a fluid communication between the inflation chambers 3a, 3b are provided on the glued surfaces of the respective inflatable elements 12, 13 and 14. The gluing between the two surfaces of the inflatable elements allow to avoid excessive fluid losses and to control the passage of gas between the inflation chambers 3a, 3b. The holes 36, 37 are through holes and made in the mesh 28, 29 as well in the wall 25, 26 of the respective inflatable element 12, 13 and 14.

The holes 36, 37 are suitably sized to allow inflation at adequate pressure and sufficient time for all the inflatable elements to be inflated.

The protection device 110 of figures 7 and 8 which incorporates all the above characteristics, provides that the two inflatable elements 13 and 14 are only partially overlapped, to adapt to the space and to the condition of use. For example, to allow adequate support space for the helmet, the two inflatable elements form a sort of step, or stepped profile. One of the two inflatable elements is placed under the helmet. The other of the two inflatable elements surrounds the helmet.

In an alternative solution, to inflate the two or more inflatable elements, the cylinder is connected to both the inflatable elements by means of a "Y" shaped pipe. In other words, a conduit is provided which has a branch with two branches towards the two or more inflatable elements. Each branch may have a different section to allow adjustment of the different gas pressure in the respective inflation chambers. The two inflatable elements are then separated fluidically, or fluidically independent, i.e. not in fluid communication.

It should be noted that in the holes there can be provided overpressure valves capable of passing the gas from an inflation chamber upon reaching a certain pressure at the other inflation chamber.

The gas source can be controlled by hand by the user when he sees the danger, or by a control unit based on the detection of the status of the vehicle/pilot system; for example, said control unit can implement a fall prediction system that allows a timely identification of the fall event and a reliable prediction of this by means of accelerometric sensors integral with the pilot (or vehicle) and a processing unit of the signals produced by the sensors themselves.

In any case, the aforesaid activation and inflation means can be integrated into the protection device 10, 110 according to the present invention or placed externally thereto.

It should also be noted that the activation modes, although being of particular relevance for an effective operation of the device, will not be further described in greater detail since methods are essentially already known to an expert in the field of protection of an individual from unexpected impacts.

The object of the present disclosure has been described up to now with reference to preferred embodiments. It is to be understood that other embodiments may exist which belong to the same inventive core, all of which are within the scope of the protection of the appended claims hereafter.

## Claims

1. A protective device (10, 110) for the personal protection of a user, said device including a first inflatable element (12, 13) having a respective inner chamber (3a) and a second inflatable element (14) provided with a respective inner chamber (3b), wherein each inflatable element (12, 13, 14) is apt to assume a deflated rest condition and an inflated active condition in the event of a fall of said user and/or in the case of a danger or impact of said user against an obstacle, wherein each inflatable element (12, 13, 14) comprises a first wall (25) and a second wall (26) opposed to each other and connected along a perimeter, a first mesh (28) or mesh portion, which internally lines at least partially said first wall (25), and a second mesh (19) or second mesh portion which internally lines at least partially said second wall (26), a plurality of tie elements (5) having ends (5a, 5b) respectively fixed or associated to said first mesh (28) and said second mesh (29), and said tie elements (5) being apt to be in a tensioned condition when the respective inflatable element is in the inflated condition, wherein, at least in said inflated condition, said first inflatable element (12, 13) and said second inflatable element (14) are mutually overlapping and define a multi-layer inflatable structure; and **characterized in that** one between the first wall (25) and the second wall (26) of said first inflatable element (12, 13) is at least partially adherently fastened to one between the first wall (25) and the second wall (26) of said second inflatable element (14).

2. Protective device (10, 110) according to claim 1, wherein a thickness of said inflatable structure is the sum of a thickness of said first inflatable element and the thickness of said second inflatable element.

3. Protective device (10, 110) according to claim 1 or 2, wherein said one between the first wall and the second wall of said first inflatable element and said one between the first wall and the second wall of said second inflatable element are provided with a communication through-hole (36, 37) for making a fluid communication between the inner chambers of the two inflatable elements.

4. Protective device (10, 110) according to claim 3, wherein the mesh (28) lining said one between the first wall (25) and the second wall (26) of said first inflatable element (12, 13) and the mesh (29) lining said one between the first wall (25) and the second wall (26) of said second inflatable element (14) are provided with said communication through-hole (36, 37) for making a fluid communication between the first inflatable element and the second inflatable element.

5. Protective device (10, 110) according to claim 4, wherein the communication through-hole (36, 37) of the first inflatable element (12, 13) and of the second inflatable element (14) are partially superimposed or partially overlapped.

6. Garment including, or integral incorporating, or associated with, a protective device (10, 110) according to any one of the preceding claims, or garment which is, or coincides with, a protective device (10, 110) according to any one of the preceding claims.

7. Method for providing a protective device (10, 110) for the personal protection of a user by means of at least a first inflatable element (12, 13) and a second inflatable element (14), wherein said method provides
- making each inflatable element (12, 13, 14) by providing a textile structure including
a first mesh (28) and a second mesh (29), and a first wall (25) and a second wall (26) opposed to each other and connected along a perimeter, wherein the first mesh (28) internally lines at least partially said first wall (25) and the second mesh (29) internally lines at least partially said second wall (26);
tie elements (5) having ends fixed or associated respectively with the first mesh (28) and second mesh (29) of the respective inflatable element, wherein said tie elements (5) are at least partially apt to be in a tensioned condition when the inflatable element is in an inflated condition;
- at least partly superimposing the first inflatable element (12, 13) and the second inflatable element (14) and fixing one between the first wall (25) and the second wall (26) of said first inflatable element (12, 13) at least partially adhering to one of the first wall (25) and the second wall (26) of said second inflatable element (14);
- said protective device (10, 110) being configured for inflating the first inflatable element (12,13) and the second inflatable element (14) to define an inflatable structure wherein the two inflatable elements (12, 13, 14) are at least partially superimposed in the inflated condition.

8. Method according to claim 7, wherein, after the first inflatable element (12, 13) and the second inflatable element (14) are made, the first inflatable element (12, 13) is pierced to obtain at least a first communication hole (36) and the second inflatable element (14) is pierced to obtain at least a second communication hole (37), wherein the first communication hole (36) is put at least partially in fluid communication with the second communication hole (37).

9. Method according to claim 8, wherein each of the first communication hole (36) and the second communication hole (37) is a through-hole made in one between the first wall and the second wall of said first inflatable element (12, 13) and in one between the first wall and the second wall of said second inflatable element (14).

10. Method according to claim 9, wherein each of the first communication hole and the second communication hole is a through-hole made in one between the first wall and the second wall of said first inflatable element (12, 13) and the respective mesh, and in one between the first wall and the second wall of said second inflatable element and the respective mesh.

11. Method as claimed in any one of claims 8 to 10, wherein a glue layer (35) is interposed between the first inflatable element and the second inflatable element, at least around the communication holes of the first inflatable element (12, 13) and the second inflatable element (14).

## Patentansprüche

1. Schutzvorrichtung (10, 110) zum persönlichen Schutz eines Benutzers, wobei die Vorrichtung ein erstes aufblasbares Element (12, 13) mit einer jeweiligen Innenkammer (3a) und ein zweites aufblasbares Element (14) aufweist, das mit einer jeweiligen Innenkammer (3b) versehen ist, wobei jedes aufblasbare Element (12, 13, 14) dazu eingerichtet ist, einen entleerten Ruhezustand bzw. im Falle eines Sturzes des Benutzers und/oder im Gefahrenfall oder bei einem Aufprall des Benutzers auf einen Gegenstand einen aufgeblasenen aktiven Zustand anzunehmen, wobei jedes aufblasbare Element (12, 13, 14) eine erste Wandung (25) und eine zweite Wandung (26) aufweist, die einander gegenüberliegen und entlang eines Umfangs verbunden sind, ein erstes Gelege (28) oder ersten Mesh-Abschnitt, das bzw. der innenseitig zumindest teilweise die erste Wandung (25) auskleidet, und ein zweites Gelege (19) oder zweiten Mesh-Abschnitt, das bzw. der innenseitig zumindest teilweise die zweite Wandung (26) auskleidet, und eine Vielzahl von Verbindungselementen (5) mit Enden (5a, 5b), die am ersten Gelege (28) bzw. zweiten Gelege (29) befestigt oder diesem zugeordnet sind, und wobei die Verbindungselemente (5) dazu eingerichtet sind, in einem gespannten Zustand zu sein, wenn das jeweilige aufblasbare Element im aufgeblasenen Zustand ist, wobei, zumindest im aufgeblasenen Zustand, das erste aufblasbare Element (12, 13) und das zweite aufblasbare Element (14) einander überlappen und eine mehrschichtige aufblasbare Struktur bilden; und **dadurch gekennzeichnet, dass** die erste Wandung (25) oder zweite Wandung (26) des ersten aufblasbaren Elements (12, 13) zumindest teilweise an der ersten Wandung (25) oder zweiten Wandung (26) des zweiten aufblasbaren Elements (14) anhaftend befestigt ist.

2. Schutzvorrichtung (10, 110) nach Anspruch 1, wobei eine Dicke der aufblasbaren Struktur gleich der Summe aus der Dicke des ersten aufblasbaren Elements und der Dicke des zweiten aufblasbaren Elements ist.

3. Schutzvorrichtung (10, 110) nach Anspruch 1 oder 2, wobei die erste Wandung oder zweite Wandung des ersten aufblasbaren Elements und die erste Wandung oder zweite Wandung des zweiten aufblasbaren Elements mit einer Verbindungsdurchgangsöffnung (36, 37) versehen sind, um eine Fluidverbindung zwischen den Innenkammern der beiden aufblasbaren Elemente herzustellen.

4. Schutzvorrichtung (10, 110) nach Anspruch 3, wobei das Gelege (28), das die erste Wandung (25) oder zweite Wandung (26) des ersten aufblasbaren Elements (12, 13) auskleidet, und das Gelege (29), das die erste Wandung (25) oder zweite Wandung (26) des zweiten aufblasbaren Elements (14) auskleidet, mit der Verbindungsdurchgangsöffnung (36, 37) zur Herstellung einer Fluidverbindung zwischen dem ersten aufblasbaren Element und dem zweiten aufblasbaren Element versehen sind.

5. Schutzvorrichtung (10, 110) nach Anspruch 4, wobei die Verbindungsdurchgangsöffnung (36, 37) des ersten aufblasbaren Elements (12, 13) und zweiten aufblasbaren Elements (14) teilweise übereinanderliegen oder teilweise einander überlappen.

6. Kleidungsstück, das eine Schutzvorrichtung (10, 110) nach einem der vorhergehenden Ansprüche aufweist, integral eingesetzt hat oder diesem zugeordnet ist, oder Kleidungsstück, das eine Schutzvorrichtung (10, 110) nach einem der vorhergehenden Ansprüche darstellt oder mit diesem übereinstimmt.

7. Verfahren zur Bereitstellung einer Schutzvorrichtung (10, 110) zum persönlichen Schutz eines Benutzers durch mindestens ein erstes aufblasbares Element (12, 13) und zweites aufblasbares Element (14), wobei das Verfahren Folgendes vorsieht:
- Herstellen jedes aufblasbaren Elements (12, 13, 14), indem eine textile Struktur bereitgestellt wird, die Folgendes umfasst:
ein erstes Gelege (28) und eine zweites Gelege (29), und eine erste Wandung (25) und eine zweite Wandung (26), die einander gegenüberliegen und entlang eines Umfangs verbunden sind, wobei das erste Gelege (28) innenseitig zumindest teilweise die erste Wandung (25) auskleidet und das zweite Gelege (29) innenseitig zumindest teilweise die zweite Wandung (26) auskleidet;
Verbindungselemente (5), die Enden aufweisen, die am ersten Gelege (28) und zweiten Gelege (29) des jeweiligen aufblasbaren Elements befestigt sind bzw. diesen zugeordnet sind, wobei die Verbindungselemente (5) zumindest teilweise dazu eingerichtet sind, in einem gespannten Zustand zu sein, wenn sich das aufblasbare Element in einem aufgeblasenen Zustand befindet;
- das erste aufblasbare Element (12, 13) und zweite aufblasbare Element (14) zumindest teilweise übereinanderzulegen und die erste Wandung (25) oder zweite Wandung (26) des ersten aufblasbaren Elements (12, 13) zumindest teilweise an der ersten Wandung (25) oder zweiten Wandung (26) des zweiten aufblasbaren Elements (14) anhaftend zu befestigen;
- wobei die Schutzvorrichtung (10, 110) dazu ausgelegt ist, das erste aufblasbare Element (12, 13) und zweite aufblasbare Element (14) aufzublasen, um eine aufblasbare Struktur zu bilden, wobei die beiden aufblasbaren Elemente (12, 13, 14) im aufgeblasenen Zustand zumindest teilweise übereinanderliegen.

8. Verfahren nach Anspruch 7, wobei nach der Herstellung des ersten aufblasbaren Elements (12, 13) und zweiten aufblasbaren Elements (14) das erste aufblasbare Element (12, 13) gelocht wird, um zumindest eine erste Verbindungsöffnung (36) zu erhalten, und das zweite aufblasbare Element (14) gelocht wird, um zumindest eine zweite Verbindungsöffnung (37) zu erhalten, wobei die erste Verbindungsöffnung (36) zumindest teilweise in Fluidverbindung mit der zweiten Verbindungsöffnung (37) gesetzt wird.

9. Verfahren nach Anspruch 8, wobei die erste Verbindungsöffnung (36) und die zweite Verbindungsöffnung (37) jeweils eine Durchgangsöffnung darstellen, die in der ersten Wandung oder zweiten Wandung des ersten aufblasbaren Elements (12, 13) sowie in der ersten Wandung oder zweiten Wandung des zweiten aufblasbaren Elements (14) hergestellt ist.

10. Verfahren nach Anspruch 9, wobei die erste Verbindungsöffnung und die zweite Verbindungsöffnung jeweils eine Durchgangsöffnung darstellen, die in der ersten Wandung oder zweiten Wandung des ersten aufblasbaren Elements (12, 13) und des jeweiligen Geleges sowie in der ersten Wandung oder zweiten Wandung des zweiten aufblasbaren Elements und des jeweiligen Geleges hergestellt ist.

11. Verfahren nach einem der Ansprüche 8 bis 10, wobei sich eine Klebeschicht (35) zwischen dem ersten aufblasbaren Element und zweiten aufblasbaren Element befindet, und zwar zumindest in einem Bereich, der die Verbindungsöffnungen des ersten aufblasbaren Elements (12, 13) und zweiten aufblasbaren Elements (14) umgibt.

## Revendications

1. Dispositif de protection (10, 110) pour la protection personnelle d'un utilisateur, ledit dispositif comprenant un premier élément gonflable (12, 13) ayant une chambre interne (3a) respective et un second élément gonflable (14) prévu avec une chambre interne (3b) respective, dans lequel chaque élément gonflable (12, 13, 14) est apte à adopter une condition de repos dégonflée et une condition active gonflée dans le cas d'une chute dudit utilisateur et/ou dans le cas d'un danger ou impact dudit utilisateur contre un obstacle, dans lequel chaque élément gonflable (12, 13, 14) comprend une première paroi (25) et une seconde paroi (26) opposées entre elles et raccordées le long d'un périmètre, une première maille (28) ou partie de maille, qui recouvre intérieurement au moins partiellement ladite première paroi (25), et une seconde maille (19) ou seconde partie de maille qui recouvre intérieurement au moins partiellement ladite seconde paroi (26), une pluralité d'éléments d'attache (5) ayant des extrémités (5a, 5b) respectivement fixées ou associées à ladite première maille (28) et à ladite seconde maille (29) et lesdits éléments d'attache (5) étant aptes à être dans une condition tendue lorsque l'élément gonflable respectif est dans la condition gonflée, dans lequel au moins dans ladite condition gonflée, ledit premier élément gonflable (12, 13) et ledit second élément gonflable (14) se chevauchent mutuellement et définissent une structure gonflable multicouche ; et **caractérisé en ce que** l'une entre la première paroi (25) et la seconde paroi (26) dudit premier élément gonflable (12, 13) est au moins partiellement fixée par adhérence à l'une entre la première paroi (25) et la seconde paroi (26) dudit second élément gonflable (14).

2. Dispositif de protection (10, 110) selon la revendication 1, dans lequel une épaisseur de ladite structure gonflable est la somme d'une épaisseur dudit premier élément gonflable et de l'épaisseur dudit second élément gonflable.

3. Dispositif de protection (10, 110) selon la revendication 1 ou 2, dans lequel ladite une entre la première paroi et la seconde paroi dudit premier élément gonflable et ladite une entre la première paroi et la seconde paroi dudit second élément gonflable sont prévues avec un trou débouchant de communication (36, 37) pour réaliser une communication de fluide entre les chambres internes des deux éléments gonflables.

4. Dispositif de protection (10, 110) selon la revendication 3, dans lequel la maille (28) recouvrant ladite une entre la première paroi (25) et la seconde paroi (26) dudit premier élément gonflable (12, 13) et la maille (29) recouvrant ladite une entre la première paroi (25) et la seconde paroi (26) dudit second élément gonflable (14) sont prévues avec ledit trou débouchant de communication (36, 37) pour réaliser une communication de fluide entre le premier élément gonflable et le second élément gonflable.

5. Dispositif de protection (10, 110) selon la revendication 4, dans lequel les trous débouchants de communication (36, 37) du premier élément gonflable (12, 13) et du second élément gonflable (14) sont partiellement superposés ou partiellement en chevauchement.

6. Vêtement comprenant ou incorporant de manière solidaire ou associé avec un dispositif de protection (10, 110) selon l'une quelconque des revendications précédentes, ou vêtement qui est, ou coïncide avec un dispositif de protection (10, 110) selon l'une quelconque des revendications précédentes.

7. Procédé pour fournir un dispositif de protection (10, 110) pour la protection personnelle d'un utilisateur au moyen d'au moins un premier élément gonflable (12, 13) et d'un second élément gonflable (14), dans lequel ledit procédé comprend l'étape suivante :
réaliser chaque élément gonflable (12, 13, 14) en fournissant une structure textile comprenant :
une première maille (28) et une seconde maille (29), et une première paroi (25) et une seconde paroi (26) opposées entre elles et raccordées le long d'un périmètre, dans lequel la première maille (28) recouvre intérieurement au moins partiellement ladite première paroi (25) et la seconde maille (29) recouvre intérieurement au moins partiellement ladite seconde paroi (26) ;
des éléments d'attache (5) ayant des extrémités fixées ou associées respectivement avec la première maille (28) et la seconde maille (29) de l'élément gonflable respectif, dans lequel lesdits éléments d'attache (5) sont au moins partiellement aptes à être dans une condition tendue lorsque l'élément gonflable est dans une condition gonflée ;
superposer au moins partiellement le premier élément gonflable (12, 13) et le second élément gonflable (14) et fixer l'une entre la première paroi (25) et la seconde paroi (26) dudit premier élément gonflable (12, 13) adhérant au moins partiellement à l'une parmi la première paroi (25) et la seconde paroi (26) dudit second élément gonflable (14) ;
ledit dispositif de protection (10, 110) étant configuré pour gonfler le premier élément gonflable (12, 13) et le second élément gonflable (14) afin de définir une structure gonflable, dans lequel les deux éléments gonflables (12, 13, 14) sont au moins partiellement superposés dans la condition gonflée.

8. Procédé selon la revendication 7, dans lequel, après avoir réalisé le premier élément gonflable (12, 13) et le second élément gonflable (14), le premier élément gonflable (12, 13) est percé pour obtenir au moins un premier trou de communication (36) et le second élément gonflable (14) est percé pour obtenir au moins un second trou de communication (37), dans lequel le premier trou de communication (36) est mis au moins partiellement en communication de fluide avec le second trou de communication (37).

9. Procédé selon la revendication 8, dans lequel chacun parmi le premier trou de communication (36) et le second trou de communication (37) est un trou débouchant réalisé dans l'une entre la première paroi et la seconde paroi dudit premier élément gonflable (12, 13) et dans l'une entre la première paroi et la seconde paroi dudit second élément gonflable (14).

10. Procédé selon la revendication 9, dans lequel chacun parmi le premier trou de communication et le second trou de communication est un trou débouchant réalisé dans l'une entre la première paroi et la seconde paroi dudit premier élément gonflable (12, 13) et la maille respective, et dans l'une entre la première paroi et la seconde paroi dudit second élément gonflable et la maille respective.

11. Procédé selon l'une quelconque des revendications 8 à 10, dans lequel une couche de colle (35) est intercalée entre le premier élément gonflable et le second élément gonflable, au moins autour des trous de communication du premier élément gonflable (12, 13) et du second élément gonflable (14).
